(19) **Europäisches Patentamt European Patent Office Office européen des brevets**

(11) **EP 4 564 296 B1**

(12) **FASCICULE DE BREVET EUROPEEN**

(45) Date de publication et mention
de la délivrance du brevet:
**15.07.2026 Bulletin 2026/29**

(21) Numéro de dépôt: **24214123.2**

(22) Date de dépôt: **20.11.2024**

(51) Classification Internationale des Brevets (IPC):
***G06T 7/73*** *(2017.01)*

(52) Classification Coopérative des Brevets (CPC):
**G06T 7/73**; G06T 2207/30252

(54) **PROCÉDÉ DE DÉTERMINATION DE LA POSITION ANGULAIRE D'UNE REMORQUE PAR RAPPORT À UN VÉHICULE TRACTEUR**

VERFAHREN ZUR BESTIMMUNG DER WINKELPOSITION EINES ANHÄNGERS RELATIV ZU EINEM ZUGFAHRZEUG

METHOD FOR DETERMINING THE ANGULAR POSITION OF A TRAILER WITH RESPECT TO A TOWING VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **28.11.2023 FR 2313190**

(43) Date de publication de la demande:
**04.06.2025 Bulletin 2025/23**

(73) Titulaire: **AUMOVIO Autonomous Mobility Germany GmbH 85057 Ingolstadt (DE)**

(72) Inventeurs:
- **PECCHIOLI, Mathieu 31100 TOULOUSE (FR)**
- **VIMORT, Jean-Baptiste 31100 TOULOUSE (FR)**
- **MOULAS, Arnaud 31100 TOULOUSE (FR)**

(74) Mandataire: **Aumovio Corporation AUMOVIO Germany GmbH Taunusstraße 36 80807 München (DE)**

(56) Documents cités:
**EP-A2- 2 949 531     JP-A- 2002 181 518**

## Description

### Domaine technique

La présente divulgation relève du domaine de la détection de la position angulaire d'une remorque.

Plus particulièrement, la présente divulgation porte sur un procédé de détermination d'un angle de lacet d'un axe longitudinal d'une remorque par rapport à un axe longitudinal d'un véhicule tracteur.

### Technique antérieure

Il existe des solutions pour aider les conducteurs à la conduite de véhicules, en leur fournissant par exemple des informations supplémentaires sur la configuration du véhicule et sa position par rapport à son environnement. Ces technologies sont également nécessaires dans une perspective de véhicules complètement autonomes. C'est le cas pour les véhicules individuels, mais aussi pour des véhicules de transports, comprenant typiquement un véhicule tracteur et une remorque.

Pour l'assistance à la conduite de tels véhicules, et notamment pour des manœuvres de marche en arrière visant à garer le véhicule, il est important de connaître avec précision la position angulaire de la remorque par rapport au véhicule tracteur, et notamment l'angle de lacet sujet à la plus forte amplitude.

Il existe déjà des solutions de détermination de l'angle de lacet d'une remorque par rapport à un véhicule, dont certaines reposent sur l'utilisation de capteurs mécaniques, montés par exemple sur le point d'attache.

De tels capteurs mécaniques sont lourds, et leur installation sur un véhicule est compliquée et nécessite une phase de calibration.

D'autres solutions connues sont basées sur l'analyse d'une image acquise par une caméra située à l'arrière du véhicule.

Néanmoins, le champ de vue d'une caméra est limité, et une caméra montée sur l'arrière du véhicule est proche de la remorque et n'arrive donc pas à détecter de grands angles de lacet de la remorque par rapport au véhicule tracteur. En effet, lorsque l'angle de lacet devient important, la remorque sort du champ de vue de la caméra, et l'angle de lacet ne peut pas être détecté.

Le document JP2002181518A divulgue un système dans lequel des caméras à grand angle de vision sont fixées des deux côtés du tracteur, de sorte que l'arrière de la remorque attelée au tracteur se trouve dans le champ de vision des caméras. Une carte illustrant la relation entre la position de la remorque capturée par les caméras et l'angle de connexion est affichée pour calculer l'angle de connexion de la remorque avec le tracteur.

Il existe donc un besoin d'un procédé pour déterminer précisément un angle de lacet d'un axe longitudinal d'une remorque par rapport à un axe longitudinal d'un véhicule tracteur sur une grande plage de valeurs de l'angle de lacet.

### Résumé

A cet effet, il est divulgué un procédé de détermination d'un angle de lacet d'un axe longitudinal d'une remorque par rapport à un axe longitudinal d'un véhicule tracteur auquel la remorque est attachée à un point d'attache, le procédé comprenant :

- acquérir, par une caméra montée sur un côté latéral du véhicule tracteur et orientée vers la remorque, une image au moins d'une partie latérale de la remorque ;
- déterminer sur l'image un repère visible sur la remorque ;
- déterminer sur l'image une longueur visible entre le repère et un bord vertical de l'image orienté vers le véhicule tracteur ;
- déterminer l'angle de lacet au moins sur la base d'un champ de vue horizontal de la caméra, d'une largeur d'une matrice de pixels de la caméra selon un axe horizontal de la caméra, de coordonnées du point d'attache, de la longueur visible, et de dimensions au moins d'une partie de la remorque,

et dans lequel déterminer l'angle de lacet comprend :

- déterminer un angle d'observation $\beta_{norm}$ entre l'axe longitudinal du véhicule tracteur et une droite reliant la caméra au repère de la remorque, au moins sur la base de ladite longueur visible, du champ de vue horizontal de la caméra, et de la largeur de la matrice de pixels de la caméra selon l'axe horizontal de la caméra ;
- déterminer des coordonnées du repère de la remorque par le biais d'une intersection entre :

    * ladite droite représentée par une équation de droite définie comme :

$$y = c * x + d$$

où x et y forment des coordonnées de points dans un système de coordonnées comprenant le repère, *c* est un coefficient directeur et *d* est une valeur d'ordonnée;

* un cercle centré sur le point d'attache et ayant un rayon égal à une distance entre le point d'attache et le repère, dans lequel le cercle est défini comme :

$$(x - a)^2 + (y - b)^2 = r^2$$

où a et b sont des coordonnées du point d'attache, et r est le rayon du cercle ;

- déterminer l'angle de lacet au moins sur la base desdites coordonnées du repère de la remorque et de coordonnées du point d'attache.

Le procédé permet de déterminer précisément l'angle de lacet de l'axe longitudinal d'une remorque par rapport à l'axe longitudinal d'un véhicule tracteur sur une grande plage de valeurs de l'angle de lacet.

Le procédé est innovant en ce qu'il utilise une caméra montée sur le côté latéral du véhicule. Ainsi, le repère se trouvera toujours dans le champ de vue de la caméra et sera toujours visible par la caméra, quelle que soit la valeur de l'angle de lacet.

En outre, le procédé est innovant sur la détermination de l'angle de lacet en fonction du champ de vue horizontal de la caméra, de la largeur de la matrice de pixels, des coordonnées du point d'attache, de la longueur visible, et des dimensions d'au moins une partie de la remorque.

Dans un mode de réalisation, le système de coordonnées est centré sur la caméra et l'équation de droite est définie comme :

$$y = tan(\beta_{norm}) * x$$

Dans un mode de réalisation, le rayon du cercle est défini comme :

$$r = \sqrt{(T_L)^2 + \left(\frac{T_l}{2}\right)^2}$$

où $T_L$ est une distance selon l'axe longitudinal de la remorque entre le point d'attache et le repère, et $T_l$ est une largeur de la remorque.

Dans un mode de réalisation, l'angle d'observation est défini comme :

$$\beta_{norm} = \frac{R_x * hFOV}{w} - C_{caméra}$$

où $R_x$ est la longueur visible, hFOV est le champ de vue horizontal de la caméra, *w* est la largeur de la matrice de pixels de la caméra selon l'axe horizontal de la caméra, et $C_{caméra}$ est un angle de normalisation qui tient compte d'une orientation de la caméra par rapport au véhicule tracteur.

Dans un mode de réalisation, l'angle de normalisation $C_{caméra}$ est défini comme :

$$C_{caméra} = \frac{hFOV}{2} - C_{yaw}$$

où $C_{yaw}$ est un paramètre de montage de la caméra décrit comme l'angle entre un axe optique de la caméra et un axe longitudinal du véhicule tracteur.

Dans un mode de réalisation, déterminer l'angle de lacet comprend :

- déterminer un premier angle auxiliaire défini comme :

$$\Phi = \arctan \frac{OR_y}{OR_x}$$

où $OR_y$ est une distance entre le repère de la remorque et le point d'attache selon un axe horizontal perpendiculaire à l'axe longitudinal du véhicule tracteur, et $OR_x$ est une distance entre le repère et le point d'attache selon l'axe longitudinal du véhicule tracteur ;

- déterminer un deuxième angle auxiliaire défini comme :

$$\theta = \arctan \frac{T_l}{2T_L}$$

où $T_L$ est une distance selon l'axe longitudinal de la remorque entre le point d'attache et le repère, et $T_l$ est une largeur de la remorque.

- déterminer l'angle de lacet défini comme :

$$\alpha = \Phi - \theta$$

Dans un mode de réalisation, le repère comprend au moins une partie d'un bord vertical arrière de la remorque.

Dans un mode de réalisation, la largeur de la matrice de pixels et la longueur visible sont déterminées en nombre de pixels sur la matrice de la caméra.

Un autre aspect de la présente invention concerne un produit programme informatique comportant des instructions qui, lorsque ces instructions sont exécutées par un processeur, conduisent le processeur à mettre en œuvre les opérations du procédé décrit ci-dessus.

Un autre aspect de l'invention concerne un système de détermination d'un angle de lacet d'un axe longitudinal d'une remorque par rapport à un axe longitudinal d'un véhicule tracteur auquel la remorque est attachée à un point d'attache, le système de détermination comprenant :

* une caméra adaptée pour être montée sur un côté latéral du véhicule tracteur de telle manière qu'elle est orientée vers la remorque, et pour acquérir une image au moins d'une partie latérale de la remorque ; et
* un calculateur configuré pour mettre en œuvre le procédé décrit ci-dessus.

Dans un mode de réalisation, le véhicule tracteur comprend au moins un rétroviseur, dans lequel ladite au moins une caméra est configurée pour être montée sur l'au moins un rétroviseur.

Dans un mode de réalisation, ladite au moins une caméra est configurée pour avoir une fonction de rétroviseur numérique.

Dans un mode de réalisation, le système de détermination comprend deux caméras montées sur des côtés latéraux opposés du véhicule tracteur, chacune des caméras étant configurée pour acquérir une image au moins d'une partie latérale de la remorque ;

et dans lequel le calculateur est configuré pour mettre en œuvre le procédé décrit ci-dessus pour chacune des caméras.

**Brève description des dessins**

D'autres caractéristiques, détails et avantages apparaîtront à la lecture de la description détaillée ci-après, et à l'analyse des dessins annexés, sur lesquels :

[Fig. 1] La figure 1 est une représentation schématique d'une vue de dessus d'un système de détermination d'un angle de lacet d'un axe longitudinal d'une remorque par rapport à un axe longitudinal d'un véhicule tracteur auquel la remorque est attachée.

[Fig. 2] La figure 2 montre l'ordinogramme d'un procédé de détermination d'un angle de lacet d'un axe longitudinal d'une remorque par rapport à un axe longitudinal d'un véhicule tracteur auquel la remorque est attachée.

[Fig. 3] La figure 3 est une représentation schématique d'une image d'une remorque prise par une caméra du système de détermination de la figure 1, la caméra étant montée sur le côté gauche du véhicule tracteur.

[Fig. 4] La figure 4 est une autre représentation schématique d'une vue de dessus du système de détermination de la figure 1.

[Fig. 5] La figure 5 est une représentation schématique d'un calculateur configuré pour mettre en œuvre le procédé de détermination de la figure 2.

**Description des modes de réalisation**

La présente invention a pour objet un procédé et un système de détermination d'un angle de lacet d'un axe longitudinal d'une remorque par rapport à un axe longitudinal d'un véhicule tracteur auquel la remorque est attachée.

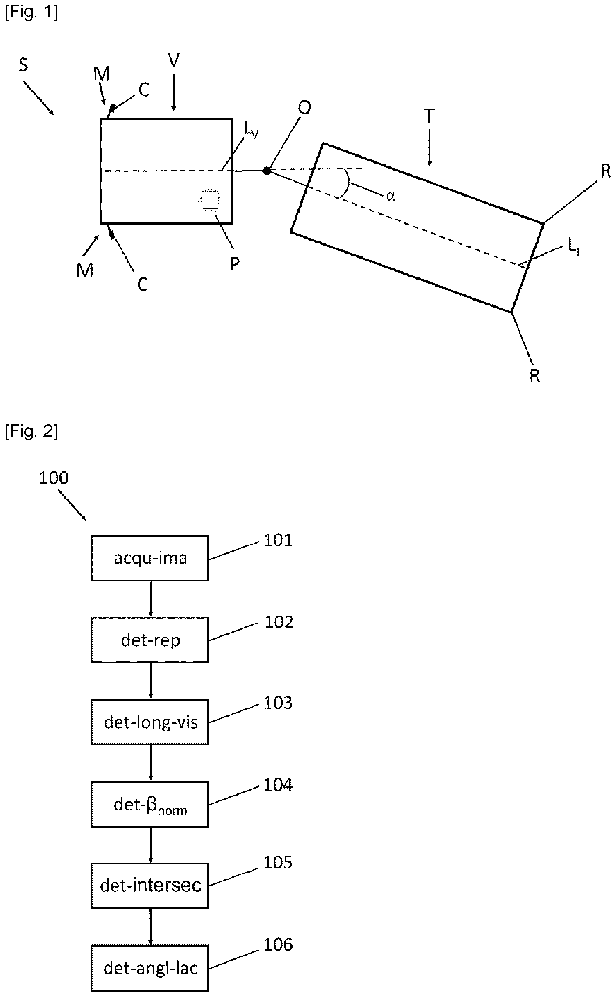

La figure 1 montre un tel système S de détermination qui comprend un véhicule tracteur V et une remorque T attachée au véhicule tracteur V à un point d'attache O tel qu'une attache-remorque.

L'orientation relative de la remorque T par rapport au véhicule tracteur V peut être caractérisée par l'angle de lacet $\alpha$ défini comme l'angle entre l'axe longitudinal $L_T$ de la remorque T et l'axe longitudinal Lv du véhicule tracteur V dans le plan horizontal.

Le véhicule tracteur V, qui peut être par exemple sous forme de voiture ou de camion, comprend un rétroviseur M extérieur de chaque côté latéral du véhicule tracteur V, permettant à un conducteur du véhicule tracteur V d'observer une partie de l'environnement derrière lui. Notamment, les rétroviseurs M permettent d'observer une partie de la remorque T et en particulier l'orientation de la remorque T par rapport au véhicule tracteur V.

Les rétroviseurs M sont installés au niveau de la partie avant des portes conducteur et passager du véhicule V.

Chaque rétroviseur M peut être sous forme de caméra C ou sous forme de miroir sur lequel est montée une caméra C.

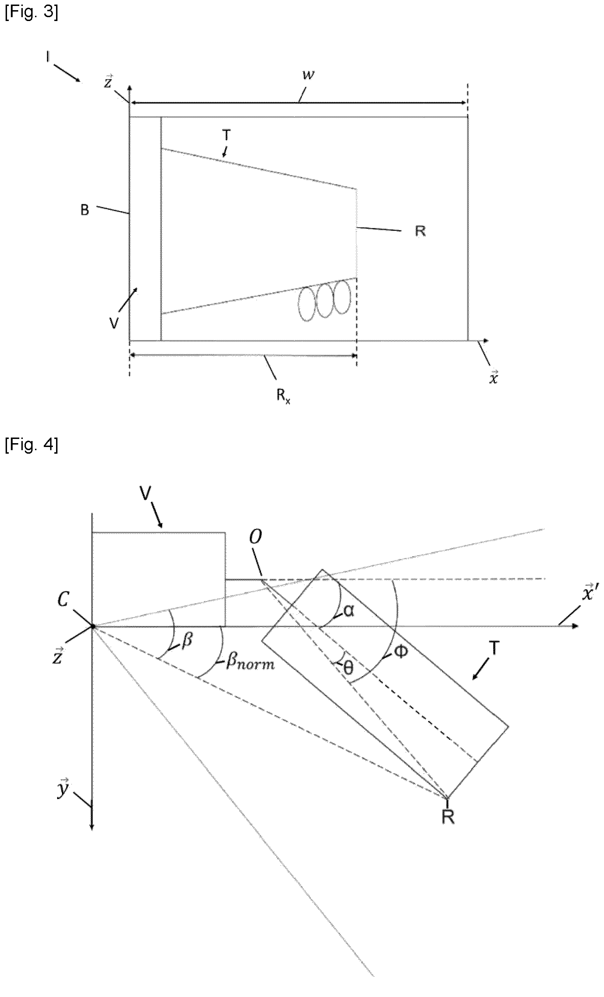

Chaque caméra C est orientée vers la remorque T et est adaptée pour acquérir une image I ou une série d'images I au moins d'une partie latérale de la remorque T. Une représentation schématique d'une telle image I est montrée sur la figure 3.

Chaque caméra C comprend une matrice de pixels qui est typiquement de forme rectangulaire et qui comprend un axe horizontal $\vec{x}$ et un axe vertical $\vec{z}$. Par conséquent, l'image I prise par la caméra est également de forme rectangulaire et est définie par les mêmes axes, i.e. l'axe horizontal $\vec{x}$ et l'axe vertical $\vec{z}$.

Dans l'exemple de la figure 3, une partie du véhicule tracteur V est visible sur l'image I. Cependant, il n'est pas nécessaire dans la détermination de l'angle de lacet que le véhicule tracteur V soit visible sur l'image I.

La remorque T comprend un repère R de chaque côté latéral, chacun des repères R étant visible par la caméra C respective du même côté latéral de la remorque T. Par exemple, le repère R peut être un bord vertical arrière de la remorque T. Le repère R respectif peut être identifié sur l'image I prise par l'une des caméras C et être utilisé dans la détermination de l'angle de lacet $\alpha$.

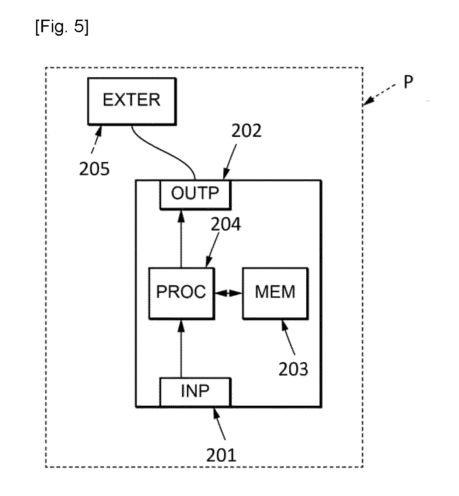

Le système S de détermination comprend en outre un calculateur P décrit plus en détail en relation avec la figure 5. Le calculateur P est configuré pour mettre en œuvre un procédé 100 de détermination de l'angle de lacet $\alpha$ dont l'ordinogramme est montré dans la figure 2.

Par souci de simplicité et afin d'illustrer au mieux le procédé 100 ci-après, une seule caméra C et un seul repère R du même côté de la remorque T sont considérés.

Lors de la mise en œuvre du procédé 100, la caméra C acquiert 101 une image I au moins d'une partie de la remorque T telle que montrée dans la figure 2.

Le repère R est détecté 102 sur l'image I. Ensuite, il est déterminé 103 sur l'image I la distance, appelée aussi longueur visible $R_x$, entre le repère R et le bord vertical B le plus proche du véhicule tracteur V.

La longueur visible $R_x$ peut être déterminée selon l'axe horizontal $\vec{x}$ en nombre de pixels sur lesquels la remorque T et le véhicule tracteur V sont visibles.

Les angles et distances déterminés et utilisés dans la suite du procédé 100 sont mieux compris à l'aide de la figure 4 qui montre une représentation schématique du système S de détermination.

Les coordonnées des différents points déterminées et/ou utilisées dans le procédé 100 se rapportent tous à un système de coordonnées centré sur la caméra C. Dans ce système de coordonnées, un premier axe $\vec{x'}$ est orienté le long de l'axe longitudinal Lv du véhicule tracteur V, et un deuxième axe $\vec{y}$ est orienté le long de la largeur du véhicule tracteur V, i.e. dans le plan horizontal et perpendiculaire au premier axe $\vec{x'}$.

L'axe vertical $\vec{z}$ est défini par rapport aux premier et deuxième axes $\vec{x'}$ et $\vec{y}$ de manière à former un repère orthogonal.

Ensuite, un angle d'observation $\beta_{norm}$ défini comme l'angle entre une droite reliant la caméra C au repère R et l'axe longitudinal Lv du véhicule tracteur V est déterminé 104 :

$$\beta_{norm} = \beta - C_{caméra}$$

Ici, $\beta$ est l'angle d'observation auxiliaire défini comme l'angle entre la droite reliant la caméra C au repère R et une droite définissant le champ de vue horizontal de la caméra C du côté du véhicule tracteur V. Le champ de vue horizontal est la partie horizontale de l'angle solide au travers duquel la caméra C est sensible à son environnement. Le champ de vue horizontal peut être défini par deux droites qui délimitent respectivement des zones visibles par la caméra C des zones non visibles par la caméra C.

$C_{caméra}$ est un angle de normalisation qui tient compte de l'orientation de la caméra C par rapport au véhicule tracteur V.

L'angle d'observation auxiliaire $\beta$ est défini comme :

$$\beta = \frac{R_x * hFOV}{w}$$

où w est la largeur de l'image I selon l'axe horizontal $\vec{x}$ de l'image I, et hFOV est le champ de vue horizontal de la caméra C. La largeur w de la matrice de pixels et le champ de vue horizontal hFOV sont des paramètres connus de la caméra C.

L'angle de normalisation $C_{caméra}$ est défini comme :

$$C_{caméra} = \frac{hFOV}{2} - C_{yaw}$$

où $C_{yaw}$ est un paramètre de montage (non montré sur les figures) de la caméra C décrit comme l'angle entre l'axe optique de la caméra C et l'axe longitudinal Lv du véhicule tracteur V. L'angle $C_{yaw}$ dépend de l'orientation de la caméra C par rapport au véhicule tracteur V et peut être déterminé pour une orientation donnée de la caméra C.

L'équation de droite de la droite qui comprend la caméra C et le repère R est définie comme :

$$y = c * x + d$$

c est un coefficient directeur et d est une valeur d'ordonnée. c est ici égal à $tan(\beta_{norm})$. Il convient de noter que, lorsque l'angle de lacet $\alpha$ change, toutes les positions possibles du repère R seront situées sur un cercle centré sur le point d'attache O et ayant comme rayon la distance entre le point d'attache O et le repère R.

L'équation décrivant le cercle est :

$$(x\text{-}a)^2 + (y\text{-}b)^2 = r^2$$

où a et b sont des coordonnées du point d'attache O. Ces coordonnées a, b dans le système de coordonnées centré sur la caméra C sont connus ou peuvent être déterminés.

Les coordonnées du repère R peuvent être déterminées 105 en déterminant l'intersection dudit cercle $((x\text{-}a)^2 + (y\text{-}b)^2 = r^2)$ avec ladite droite $(y = \tan(\beta_{norm}) * x)$. La coordonnée y dans l'équation du cercle est remplacée par l'équation de droite à cet effet :

$$(x\text{-}a)^2 + (y\text{-}b)^2 = r^2$$

$$x^2 - 2ax + a^2 + y^2 - 2by + b^2 - r^2 = 0$$

$$x^2 - 2ax + a^2 + (\tan(\beta_{norm}) * x)^2 - 2b(\tan(\beta_{norm}) * x) + b^2 - r^2 = 0$$

$$(1 + \tan^2(\beta_{norm}))x^2 - (2a + 2b\tan(\beta_{norm})x) + (a^2 + b^2 - r^2) = 0$$

$$A_2 x^2 + A_1 x + A_0$$

où $A_2 = 1 + \tan^2(\beta_{norm})$, $A_1 = -(2a + 2b \tan \beta_{norm})$, $A_0 = a^2 + b^2 - r^2$

On obtient une équation du second degré avec les coefficients $A_2$, $A_1$, $A_0$.

$A_0$ est fonction du rayon r du cercle qui peut être déterminé en fonction des dimensions de la remorque T :

$$r = OR = \sqrt{(T_L)^2 + \left(\frac{T_l}{2}\right)^2}$$

$T_L$ est la distance selon l'axe longitudinal $L_T$ de la remorque T entre le point d'attache O et le repère R, et $T_l$ est la largeur de la remorque T. Dans le cas où le repère R est le bord vertical arrière de la remorque T, $T_L$ correspond à la longueur de la remorque T, i.e. $T_L$ est la distance selon l'axe longitudinal $L_T$ de la remorque T entre le point d'attache O et le repère R. La distance $T_L$ et la largeur $T_l$ sont des paramètres connus de la remorque T.

Il existe deux solutions pour x qui correspondant aux deux intersections entre le cercle et la droite :

$$x_{1/2} = \frac{-A_1 \pm \sqrt{\Delta}}{2*A_2}$$

où

$$\Delta = (A_1)^2 - 4 * A_2 * A_0.$$

L'une des deux solutions correspond à la coordonnée $x_R$ du repère R. L'autre solution peut être écartée. La coordonnée $y_R$ correspondante du repère R peut être obtenue après insertion de la coordonnée $x_R$ dans l'équation de droite :

$$y_R = \tan(\beta_{norm}) * x_R$$

Afin de déterminer l'angle de lacet $\alpha$, un premier angle auxiliaire $\Phi$ et un deuxième angle auxiliaire $\theta$ sont déterminés.

Le premier angle auxiliaire $\Phi$ se réfère à l'angle entre l'axe longitudinal Lv du véhicule tracteur V et la droite reliant le point d'attache O et le repère R, et est défini comme :

$$\Phi = \arctan\frac{OR_y}{OR_x} = \arctan\frac{y_R - b}{x_R - a}$$

Le deuxième angle auxiliaire $\theta$ se réfère à l'angle entre l'axe longitudinal $L_T$ de la remorque T et la droite reliant le point d'attache O au repère R, et est défini comme :

$$\theta = \arctan\frac{T_l}{2T_L}$$

Ainsi, l'angle de lacet $\alpha$ peut être déterminé 106 :

$$\alpha = \Phi - \theta$$

Afin de pouvoir détecter l'angle de lacet $\alpha$ des deux côtés du véhicule tracteur V, une caméra C de chaque côté latéral du véhicule tracteur V peut être utilisée. Ainsi, un repère R de la remorque T sera toujours visible par l'une des deux caméras C.

Le procédé 100 peut être mis en œuvre de manière réitérée afin de fournir des valeurs actualisées de l'angle de lacet $\alpha$ de manière réitérée.

La figure 5 montre un mode de réalisation du calculateur P configuré pour mettre en œuvre au moins une partie du procédé 100.

Le calculateur P comporte au moins une interface d'entrée 201 pour la réception de messages ou instructions, et au moins une interface de sortie 202 pour la communication avec des dispositifs externes 205.

Le calculateur P comprend en outre une mémoire 203 pour stocker des instructions permettant la mise en œuvre d'une partie au moins du procédé 100, les données reçues, et des données temporaires pour réaliser les différentes opérations 101, 102, 103, 104, 105, 106 du procédé 100 telles que décrites précédemment.

Le calculateur P comporte en outre un circuit de traitement 204. Ce circuit peut être, par exemple :

- un processeur apte à interpréter des instructions sous la forme de programme informatique, ou
- une carte électronique dont les opérations du procédé 100 de la divulgation peuvent être décrites dans le silicium, ou encore
- une puce électronique programmable comme une puce FPGA pour « *Field-Programmable Gate Array* » en anglais, comme un SOC pour « *System On Chip* » en anglais ou comme un ASIC pour « *Application Specific Integrated Circuit* » an anglais.

En fonction du mode de réalisation, le calculateur P peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support non représentés sur la figure 5. Le support de stockage amovible peut être, par exemple, un disque compact CD, un disque vidéo/polyvalent numérique DVD, un disque flash, une clé USB, etc.

En fonction du mode de réalisation, la mémoire 203, l'unité de stockage de données ou le support de stockage amovible contiennent des instructions qui, lorsqu'elles sont exécutées par le circuit de traitement 204, amènent ce circuit à effectuer ou contrôler l'au moins une interface d'entrée 201, l'au moins une interface de sortie 202, le stockage de données dans la mémoire 203 et/ou le traitement de données et/ou la mise en œuvre d'au moins une partie du procédé 100 selon la figure 2.

Le circuit de traitement 204 peut être un composant implémentant le pilotage du calculateur P.

En outre, le calculateur P peut être mis en œuvre sous forme logicielle, auquel cas il prend la forme d'un programme exécutable par un processeur, ou sous forme matérielle, ou « *hardware* », comme un circuit intégré spécifique application ASIC, un système sur puce SOC, ou sous forme d'une combinaison d'éléments matériels et logiciels, par exemple un programme logiciel destiné à être chargé et exécuté sur un composant électronique décrit ci-avant tel que FPGA.

Le calculateur P peut également utiliser des architectures hybrides, par exemple des architectures basées sur un CPU+FPGA, un GPU pour « *Graphics Processing Unit* » ou un MPPA pour « *Multi-Purpose Processor Array* ».

La présente divulgation ne se limite pas aux exemples de dispositifs, systèmes, procédés, utilisations et produits programmes informatiques décrits ci-avant, seulement à titre d'exemple, mais elle englobe toutes les variantes que pourra envisager la personne du métier dans le cadre de la protection recherchée.

**Revendications**

1. Procédé (100) de détermination d'un angle de lacet ($\alpha$) d'un axe longitudinal ($L_T$) d'une remorque (T) par rapport à un axe longitudinal (Lv) d'un véhicule tracteur (V) auquel la remorque (T) est attachée à un point d'attache (O), le procédé comprenant :

   - acquérir (101), par une caméra (C) montée sur un côté latéral du véhicule tracteur (V) et orientée vers la remorque (T), une image (I) au moins d'une partie latérale de la remorque (T) ;
   - déterminer (102) sur l'image (I) un repère (R) visible sur la remorque (T) ;
   - déterminer (103) sur l'image (I) une longueur visible ($R_x$) entre le repère (R) et un bord vertical (B) de l'image (I) orienté vers le véhicule tracteur (V) ;
   - déterminer l'angle de lacet ($\alpha$) au moins sur la base d'un champ de vue horizontal (hFOV) de la caméra (C), d'une largeur (*w*) d'une matrice de pixels de la caméra (C) selon un axe horizontal ($\vec{x}$) de la caméra (C), de coordonnées du point d'attache (O), de la longueur visible ($R_x$), et de dimensions ($T_L$, $T_l$) au moins d'une partie de la remorque (T),
   et dans lequel déterminer l'angle de lacet ($\alpha$) comprend :

      - déterminer (104) un angle d'observation ($\beta_{norm}$) entre l'axe longitudinal (Lv) du véhicule tracteur (V) et une droite (CR) reliant la caméra (C) au repère (R) de la remorque (T), au moins sur la base de ladite longueur visible ($R_x$), du champ de vue horizontal (hFOV) de la caméra (C), et de la largeur (w) de la matrice de pixels de la caméra (C) selon l'axe horizontal ($\vec{x}$) de la caméra (C) ;

   le procédé étant **caractérisé en ce qu'**il comprend:

      - déterminer (105) des coordonnées ($x_R$, $y_R$) du repère (R) de la remorque (T) par le biais d'une intersection entre :

* ladite droite (CR) représentée par une équation de droite définie comme :

$$y = c * x + d$$

où x et y forment des coordonnées de points dans un système de coordonnées comprenant le repère (R), *c* est un coefficient directeur et *d* est une valeur d'ordonnée ;
* un cercle centré sur le point d'attache (O) et ayant un rayon égal à une distance entre le point d'attache (O) et le repère (R), dans lequel le cercle est défini comme :

$$(x - a)^2 + (y - b)^2 = r^2$$

où a et b sont des coordonnées du point d'attache (O), et r est le rayon du cercle ;

- déterminer (106) l'angle de lacet ($\alpha$) au moins sur la base desdites coordonnées ($x_R$, $y_R$) du repère (R) de la remorque (T) et de coordonnées du point d'attache (O).

**2.** Procédé selon la revendication 1, dans lequel le système de coordonnées est centré sur la caméra (C) et l'équation de droite est définie comme :

$$y = tan(\beta_{norm}) * x$$

**3.** Procédé selon l'une quelconque des revendications 1 et 2, dans lequel le rayon du cercle est défini comme :

$$r = \sqrt{(T_L)^2 + \left(\frac{T_l}{2}\right)^2}$$

où $T_L$ est une distance selon l'axe longitudinal ($L_T$) de la remorque (T) entre le point d'attache (O) et le repère (R), et $T_l$ est une largeur de la remorque (T).

**4.** Procédé selon l'une quelconque des revendications 1 à 3, dans lequel l'angle d'observation ($\beta_{norm}$) est défini comme :

$$\beta_{norm} = \frac{R_x * hFOV}{w} - C_{caméra}$$

où $R_x$ est la longueur visible, hFOV est le champ de vue horizontal de la caméra (C), *w* est la largeur de la matrice de pixels de la caméra (C) selon l'axe horizontal ($\vec{x}$) de la caméra (C), et $C_{caméra}$ est un angle de normalisation qui tient compte d'une orientation de la caméra (C) par rapport au véhicule tracteur (V).

**5.** Procédé selon la revendication 4, dans lequel l'angle de normalisation est défini comme :

$$C_{caméra} = \frac{hFOV}{2} - C_{yaw}$$

où $C_{yaw}$ est un paramètre de montage de la caméra (C) décrit comme un angle entre un axe optique de la caméra (C) et l'axe longitudinal (Lv) du véhicule tracteur (V).

**6.** Procédé selon l'une quelconque des revendications précédentes, dans lequel déterminer l'angle de lacet ($\alpha$) comprend :

- déterminer un premier angle auxiliaire ($\Phi$) défini comme :

$$\Phi = \arctan \frac{OR_y}{OR_x}$$

où $OR_y$ est une distance entre le repère (R) de la remorque (T) et le point d'attache (O) selon un axe horizontal perpendiculaire à l'axe longitudinal (Lv) du véhicule tracteur (V), et $OR_x$ est une distance entre le repère (R) et le point d'attache (O) selon l'axe longitudinal (Lv) du véhicule tracteur (V) ;
- déterminer un deuxième angle auxiliaire (θ) défini comme :

$$\theta = \arctan \frac{T_l}{2T_L}$$

où $T_L$ est une distance selon l'axe longitudinal (L_T) de la remorque (T) entre le point d'attache (O) et le repère (R), et $T_l$ est une largeur de la remorque (T).
- déterminer l'angle de lacet (α) défini comme :

$$\alpha = \Phi - \theta$$

**7.** Produit programme informatique comportant des instructions qui, lorsque ces instructions sont exécutées par un processeur, conduisent le processeur à mettre en œuvre des opérations d'un procédé (100) selon l'une quelconque des revendications 1 à 6.

**8.** Système (S) de détermination d'un angle de lacet (α) d'un axe longitudinal (L_T) d'une remorque (T) par rapport à un axe longitudinal (Lv) d'un véhicule tracteur (V) auquel la remorque (T) est attachée à un point d'attache (O), le système (S) de détermination comprenant :

* une caméra (C) adaptée pour être montée sur un côté latéral du véhicule tracteur (V) de telle manière qu'elle est orientée vers la remorque (T), et pour acquérir une image (I) au moins d'une partie latérale de la remorque (T) ; et
* un calculateur (P) configuré pour mettre en œuvre un procédé (100) selon l'une quelconque des revendications 1 à 6.

**9.** Système de détermination selon la revendication 8, dans lequel ladite au moins une caméra (C) est configurée pour avoir une fonction de rétroviseur numérique.

**Patentansprüche**

**1.** Verfahren (100) zur Bestimmung eines Gierwinkels (α) einer Längsachse (L_T) eines Anhängers (T) relativ zu einer Längsachse (Lv) eines Zugfahrzeugs (V), an das der Anhänger (T) an einem Ankupplungspunkt (O) angekuppelt ist, wobei das Verfahren Folgendes umfasst:

- das Erfassen (101) eines Bildes (I) wenigstens eines seitlichen Teils des Anhängers (T) durch eine an einer Seitenfläche des Zugfahrzeugs (V) montierte und auf den Anhänger (T) ausgerichtete Kamera (C);
- das Bestimmen (102) einer auf dem Anhänger (T) sichtbaren Markierung (R) auf dem Bild (I);
- das Bestimmen (103) einer sichtbaren Länge ($R_x$) zwischen der Markierung (R) und einem zum Zugfahrzeug (V) hin orientierten vertikalen Rand (B) des Bildes (I) auf dem Bild (I);
- das Bestimmen des Gierwinkels (α) wenigstens auf der Grundlage eines horizontalen Sichtfelds (hFOV) der Kamera (C), einer Breite (w) einer Pixelmatrix der Kamera (C) entlang einer horizontalen Achse ($\vec{x}$) der Kamera (C), von Koordinaten des Ankupplungspunkts (O), der sichtbaren Länge ($R_x$) sowie von Abmessungen ($T_L$, $T_l$) wenigstens eines Teils des Anhängers (T), und wobei das Bestimmen des Gierwinkels (α) Folgendes umfasst:

- das Bestimmen (104) eines Beobachtungswinkels ($\beta_{norm}$) zwischen der Längsachse (Lv) des Zugfahrzeugs (V) und einer Geraden (CR), welche die Kamera (C) mit der Markierung (R) des Anhängers (T) verbindet, wenigstens auf der Grundlage der genannten sichtbaren Länge ($R_x$), des horizontalen Sichtfelds (hFOV) der Kamera (C) und der Breite ($w$) der Pixelmatrix der Kamera (C) entlang der horizontalen Achse ($\vec{x}$)

der Kamera (C);

wobei das Verfahren **dadurch gekennzeichnet ist, dass** es Folgendes umfasst:

- das Bestimmen (105) von Koordinaten $(x_R, y_R)$ der Markierung (R) des Anhängers (T) mittels eines Schnittpunkts zwischen:

* der genannten Geraden (CR), dargestellt durch eine Geradengleichung, die definiert ist als:

$$y = c * x + d$$

wobei x und y Koordinaten von Punkten in einem Koordinatensystem bilden, das die Markierung (R) umfasst, wobei $c$ ein Richtungskoeffizient und $d$ ein Ordinatenwert ist;
* einem auf den Ankupplungspunkt (O) zentrierten Kreis mit einem Radius, der gleich einem Abstand zwischen dem Ankupplungspunkt (O) und der Markierung (R) ist, wobei der Kreis definiert ist als:

$$(x - a)^2 + (y - b)^2 = r^2$$

wobei a und b Koordinaten des Ankupplungspunkts (O) sind und r der Radius des Kreises ist;

- das Bestimmen (106) des Gierwinkels ($\alpha$) wenigstens auf der Grundlage der genannten Koordinaten $(x_R, y_R)$ der Markierung (R) des Anhängers (T) und von Koordinaten des Ankupplungspunkts (O).

2. Verfahren nach Anspruch 1, wobei das Koordinatensystem auf die Kamera (C) zentriert ist und die Geradengleichung definiert ist als:

$$y = tan(\beta_{norm}) * x$$

3. Verfahren nach einem der Ansprüche 1 und 2, wobei der Radius des Kreises definiert ist als:

$$r = \sqrt{(T_L)^2 + \left(\frac{T_l}{2}\right)^2}$$

wobei $T_L$ ein Abstand entlang der Längsachse ($L_T$) des Anhängers (T) zwischen dem Ankupplungspunkt (O) und der Markierung (R) ist und $T_l$ eine Breite des Anhängers (T) ist.

4. Verfahren nach einem der Ansprüche 1 bis 3, wobei der Beobachtungswinkel ($\beta_{norm}$) definiert ist als:

$$\beta_{norm} = \frac{R_x * hFOV}{w} - C_{Kamera}$$

wobei $R_x$ die sichtbare Länge ist, hFOV das horizontale Sichtfeld der Kamera (C) ist, $w$ die Breite der Pixelmatrix der Kamera (C) entlang der horizontalen Achse ($\vec{x}$) der Kamera (C) ist und $C_{Kamera}$ ein Normalisierungswinkel ist, der eine Ausrichtung der Kamera (C) relativ zum Zugfahrzeug (V) berücksichtigt.

5. Verfahren nach Anspruch 4, wobei der Normalisierungswinkel definiert ist als:

$$C_{Kamera} = \frac{hFOV}{2} - C_{yaw}$$

wobei $C_{yaw}$ ein Montageparameter der Kamera (C) ist, der als Winkel zwischen einer optischen Achse der Kamera (C) und der Längsachse (Lv) des Zugfahrzeugs (V) beschrieben ist.

**6.** Verfahren nach einem der vorhergehenden Ansprüche, wobei das Bestimmen des Gierwinkels ($\alpha$) Folgendes umfasst:

- das Bestimmen eines ersten Hilfswinkels ($\Phi$), der definiert ist als:

$$\Phi = \arctan \frac{OR_y}{OR_x}$$

wobei $OR_y$ ein Abstand zwischen der Markierung (R) des Anhängers (T) und dem Ankupplungspunkt (O) entlang einer zur Längsachse (Lv) des Zugfahrzeugs (V) senkrechten horizontalen Achse ist und $OR_x$ ein Abstand zwischen der Markierung (R) und dem Ankupplungspunkt (O) entlang der Längsachse (Lv) des Zugfahrzeugs (V) ist;
- das Bestimmen eines zweiten Hilfswinkels ($\theta$), der definiert ist als:

$$\theta = \arctan \frac{T_l}{2T_L}$$

wobei $T_L$ ein Abstand entlang der Längsachse ($L_T$) des Anhängers (T) zwischen dem Ankupplungspunkt (O) und der Markierung (R) ist und $T_l$ eine Breite des Anhängers (T) ist.
- das Bestimmen des Gierwinkels ($\alpha$), der definiert ist als:

$$\alpha = \Phi - \theta$$

**7.** Computerprogrammprodukt, das Instruktionen umfasst, die, wenn diese Instruktionen von einem Prozessor ausgeführt werden, den Prozessor dazu veranlassen, Operationen eines Verfahrens (100) nach einem der Ansprüche 1 bis 6 auszuführen.

**8.** System (S) zur Bestimmung eines Gierwinkels ($\alpha$) einer Längsachse ($L_T$) eines Anhängers (T) relativ zu einer Längsachse (Lv) eines Zugfahrzeugs (V), an das der Anhänger (T) an einem Ankupplungspunkt (O) angekuppelt ist, wobei das System (S) zur Bestimmung Folgendes umfasst:

* eine Kamera (C), die dazu ausgebildet ist, an einer Seitenfläche des Zugfahrzeugs (V) derart montiert zu werden, dass sie auf den Anhänger (T) ausgerichtet ist, und ein Bild (I) wenigstens eines seitlichen Teils des Anhängers (T) zu erfassen; und
* eine Recheneinheit (P), die dazu konfiguriert ist, ein Verfahren (100) nach einem der Ansprüche 1 bis 6 auszuführen.

**9.** System zur Bestimmung nach Anspruch 8, wobei die genannte mindestens eine Kamera (C) dazu konfiguriert ist, eine Funktion eines digitalen Rückspiegels aufzuweisen.

**Claims**

**1.** A method (100) for detecting a yaw angle ($\alpha$) of a longitudinal axis ($L_T$) of a trailer (T) relative to a longitudinal axis (Lv) of a towing vehicle (V) to which the trailer (T) is attached at an attachment point (O), the method comprising:

- acquiring (101), by means of a camera (C) mounted on a lateral side of the towing vehicle (V) and oriented toward the trailer (T), an image (I) of at least one lateral portion of the trailer (T);
- determining (102) a reference point (R) on the image (I) that is visible on the trailer (T);
- determining (103) on the image (I) a visible length ($R_x$) between the reference point (R) and a vertical edge (B) of the image (I) oriented toward the towing vehicle (V);
- determining the yaw angle ($\alpha$) based at least on the horizontal field of view (hFOV) of the camera (C), the width ($w$) of a pixel matrix of the camera (C) along a horizontal ($\vec{x}$) axis of the camera (C), the coordinates of the attachment point (O), the visible length ($R_x$), and the dimensions ($T_L$, $T_l$) of at least a portion of the trailer (T), and wherein determining the yaw angle ($\alpha$) comprises:

- determining (104) an observation angle ($\beta_{norm}$) between the longitudinal axis (Lv) of the towing vehicle (V) and a straight line (CR) connecting the camera (C) to the reference point (R) of the trailer (T), based at least on said visible length ($R_x$), of the horizontal field of view (hFOV) of the camera (C), and the width ($w$) of the pixel matrix of the camera (C) along the horizontal ($\vec{x}$) axis of the camera (C);

the method being **characterized in that** it comprises:

- determining (105) coordinates ($x_R$, $y_R$) of the reference point (R) of the trailer (T) by means of an intersection between:

* said straight line (CR) represented by a straight-line equation defined as:

$$y = c * x + d$$

where x and y are the coordinates of points in a coordinate system comprising the reference point (R), c is a slope coefficient, and d is an ordinate value;
* a circle centred at the attachment point (O) and having a radius equal to the distance between the attachment point (O) and the reference point (R), where the circle is defined as:

$$(x - a)^2 + (y - b)^2 = r^2$$

where a and b are coordinates of the attachment point (O), and r is the radius of the circle;

- determining (106) the yaw angle ($\alpha$) at least based on said coordinates ($x_R$, $y_R$) of the reference point (R) of the trailer (T) and on coordinates of the attachment point (O).

2. The method according to Claim 1, wherein the coordinate system is centred on the camera (C) and the straight-line equation is defined as:

$$y = tan(\beta_{norm}) * x$$

3. The method according to any of Claims 1 and 2, wherein the radius of the circle is defined as:

$$r = \sqrt{(T_L)^2 + \left(\frac{T_l}{2}\right)^2}$$

where $T_L$ is a distance along the longitudinal axis ($L_T$) of the trailer (T) between the attachment point (O) and the reference point (R), and $T_l$ is a width of the trailer (T).

4. The method according to any of Claims 1 to 3, wherein the observation angle ($\beta_{norm}$) is defined as:

$$\beta_{norm} = \frac{R_x * hFOV}{w} - C_{camera}$$

where $R_x$ is the visible length, hFOV is the horizontal field of view of the camera (C), $w$ is the width of the pixel array of the camera (C) along the horizontal axis ($\vec{x}$) of the camera (C), and $C_{camera}$ is a normalisation angle that takes into account the orientation of the camera (C) relative to the towing vehicle (V).

5. The method according to Claim 4, wherein the normalization angle is defined as:

$$C_{camera} = \frac{hFOV}{2} - C_{yaw}$$

**EP 4 564 296 B1**

where $C_{yaw}$ is a camera (C) mounting parameter defined as the angle between the optical axis of the camera (C) and the longitudinal axis (Lv) of the towing vehicle (V).

6. The method according to any one of the preceding claims, wherein determining the yaw angle ($\alpha$) comprises:

- determining a first auxiliary angle ($\Phi$) defined as:

$$\Phi = \arctan \frac{OR_y}{OR_x}$$

where $OR_y$ is a distance between the reference point (R) of the trailer (T) and the attachment point (O) along a horizontal axis perpendicular to the longitudinal axis (Lv) of the towing vehicle (V), and $OR_x$ is a distance between the reference point (R) and the attachment point (O) along the longitudinal axis (Lv) of the towing vehicle (V);
- determining a second auxiliary angle ($\theta$) defined as:

$$\theta = \arctan \frac{T_l}{2T_L}$$

where $T_L$ is a distance along the longitudinal axis ($L_T$) of the trailer (T) between the attachment point (O) and the reference point (R), and $T_l$ is a width of the trailer (T);
- determining the yaw angle ($\alpha$) defined as:

$$\alpha = \Phi - \theta$$

7. A computer program comprising instructions which, when executed by a processor, cause the processor to perform operations of a method (100) according to any one of claims 1 to 6.

8. A system (S) for detecting a yaw angle ($\alpha$) of a longitudinal axis ($L_T$) of a trailer (T) relative to a longitudinal axis (Lv) of a towing vehicle (V) to which the trailer (T) is attached at an attachment point (O), the detection system (S) comprising:

* a camera (C) adapted to be mounted on a side of the towing vehicle (V) in such a way that it faces the trailer (T), and to acquire an image (I) of at least one side of the trailer (T); and
* a computer (P) configured to implement a method (100) according to any one of claims 1 to 6.

9. A detection system according to claim 8, wherein said at least one camera (C) is configured to function as a digital rear-view mirror.

[Fig. 1]

[Fig. 2]

[Fig. 3]

[Fig. 4]

[Fig. 5]

# EP 4 564 296 B1

## RÉFÉRENCES CITÉES DANS LA DESCRIPTION

**Documents brevets cités dans la description**

- JP 2002181518 A